# EUROPÄISCHE PATENTSCHRIFT

(11) **EP 1 529 622 B1**
(45) Veröffentlichungstag und Bekanntmachung des Hinweises auf die Patenterteilung: **01.08.2007**
(21) Anmeldenummer: 04025850.1
(22) Anmeldetag: 30.10.2004
(51) Int. Cl.: B29C 51/42, B29C 51/04, B29C 51/30

(54) **Formwerkzeug zum Tiefziehen von Behältern aus thermoplastischem Kunststoff**
Apparatus for thermoforming of thermoplastic containers
Appareil pour thermoformage des récipients thermoplastiques

(30) Priorität: 05.11.2003 DE 10351585
(43) Veröffentlichungstag der Anmeldung: 11.05.2005
(73) Patentinhaber: ILLIG Maschinenbau GmbH & Co. KG, 74081 Heilbronn (DE)
(72) Erfinder: Teller, Marcus, 74078 Heilbronn (DE); Kratochwil, Klaus, 74078 Heilbronn (DE); Vogel, Berthold, 74336 Brackenheim (DE)

(56) Entgegenhaltungen:
- EP-A- 1 142 691
- DE-A1- 19 838 289
- DE-A1- 19 838 290
- DE-C1- 3 109 415
- DE-C1- 4 418 064
- DE-C1- 10 119 567
- DE-U1- 20 116 922
- DE-U1- 29 605 248
- DE-U1- 29 605 249

## Beschreibung

Die Erfindung geht aus von einem Formwerkzeug nach dem Oberbegriff des Anspruches 1. Mit diesem werden aus einer erwärmten Folienbahn aus thermoplastischem Kunststoff mittels Druckluft Behälter tiefgezogen und ggf. ausgestanzt.

Aus der DE 29605248 ist ein derartiges Formwerkzeug bekannt, bei dem in der Matrize eine Hülse sitzt, die zwei Ringkammern zum Zuführen and Abführen eines Kühlmediums aufweist.

Nachteilig bei dieser Kühlwasserzufuhr ist die indirekte Abkühlung des Streckhelfus, da der Kühleinsatz in Kontakt mit dem Außenumfang des Niederhalters ist, und nicht in dem Niederhalter integriert.

Aus der DE 43 26 190 A1 ist ein derartiges Formwerkzeug bekannt, bei dem jeder Niederhalter direkt gekühlt ist bis in den unteren, der Folienbahn zugewandten Bereich. Um dies zu erreichen wird der Niederhalter aus einem Außentopf und einem Innentopf gebildet, die so gestaltet sind, dass sie einen Zwischenraum zum Durchleiten einer Kühlflüssigkeit aufweisen. Die Zufuhr und Abfuhr der Kühlflüssigkeit erfolgt von der geschlossenen Stirnseite des Niederhalters her über zwei Rohre, die verschiebbar in der Werkzeugoberplatte geführt sind und mit Bohrungen in der Werkzeugoberplatte in Verbindung stehen. In der Stirnseite sind des weiteren Verbindungsleitungen zum Zuführen und Abführen der Kühlflüssigkeit zum Zwischenraum vorgesehen.

Nachteilig bei dieser Kühlwasserzufuhr ist der Platzbedarf der Rohre, der den Einsatz für im Durchmesser kleinere Behälter baulich nicht erlaubt. Eine Grenze liegt im Durchmesserbereich von 70mm, das heißt bei kleineren Durchmessern kann diese Kühlwasserführung nicht angewendet werden. Ein weiterer Nachteil liegt darin, dass bei einer Druckbeaufschlagung des Niederhalters auf der Stirnseite, wie sie bei verschiedenen Verfahrensabläufen vorteilhaft ist, die Fläche der Rohre nicht mit Druck beaufschlagt wird, folglich die Kraft auf den Niederhalter geringer ausfällt. Ein generelles Problem bei dieser indirekten Kühlung liegt in der guten Abdichtung der Kühlflüssigkeit, um eine Leckage sicher zu verhindern.

Aus der DE 31 09 415 A1 ist eine indirekte Kühlung des Niederhalters bekannt, indem dieser an einer gekühlten Kühlbuchse im unteren Bereich anliegt. Diese Art indirekte Kühlung ist von der Kühlwirkung her nicht so effektiv wie eine direkte Kühlung, insbesondere was den vorderen, der Folienbahn zugewandten Bereich anbelangt. Zum Erzielen einer hohen Taktzahl kommt es aber gerade auf ein gutes Kühlen dieses Bereiches an.

Aus der DE 201 16 922 U1 ist ein Formwerkzeug bekannt, bei dem der Niederhalter ebenfalls zweigeteilt mit einem Zwischenraum ausgebildet ist. Hier dient dieser Zwischentraum allerdings der Formluftzufuhr. In den Zwischenraum zugeführt wird die Formluft über Bohrungen in der Kopfplatte und über Ringkanäle in Niederhalter und Kopfplatte. Die Kühlung selbst kann hier nur indirekt erfolgen.

Der Erfindung liegt die Aufgabe zugrunde, die geschilderten Nachteile des Standes der Technik zu überwinden unter Beibehaltung des Vorteiles einer direkten Kühlung des Niederhalters im der Folienbahn zugewandten Bereich. Eine Beschränkung der Anwendung auf bestimmte Durchmesserbereiche sollte nicht gegeben sein. Eine Beeinflussung der Niederhalterkraft bei Beaufschlagung der Stirnseite des Niederhalters mit Druckluft sollte nicht eintreten. Die Montage von sicher wirkenden Dichtungen zum Verhindern einer Leckage sollte auf einfache, sichere Weise möglich sein. Die erfindungsgemäße Ausführung sollte sich auch dann anwenden lassen, wenn der Streckhelfer dichtend im Niederhalter geführt ist oder ein zusätzlicher Sperrkolben dichtend und verschiebbar im Niederhalter angeordnet ist.

Gelöst ist diese Aufgabe erfindungsgemäß durch die im Kennzeichen des Hauptanspruchs angegebenen Maßnahmen.

Weitere bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigen:

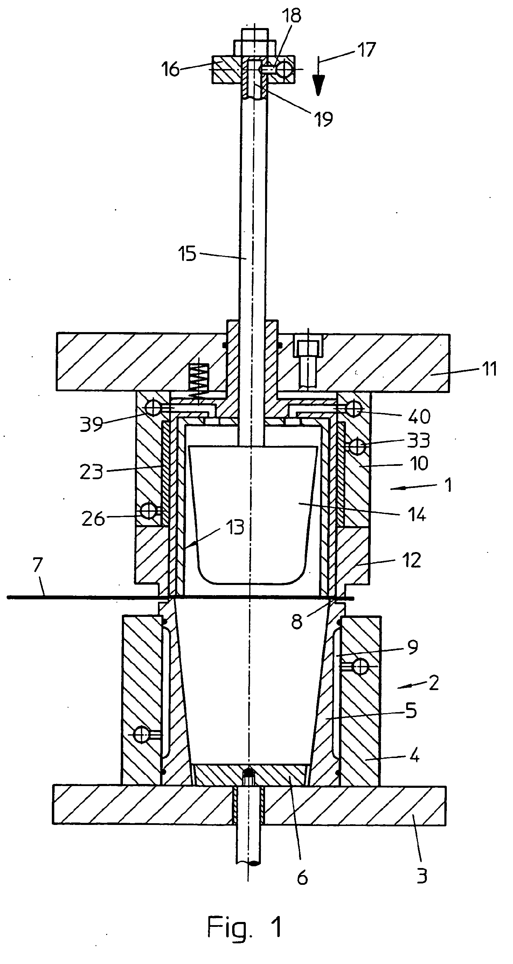

- Figur 1: einen Querschnitt durch das Formwerkzeug in geschlossener Stellung vor Einleitung des Tiefziehvorganges.
- Figur 2: eine vergrößerte Darstellung des Niederhalters im Oberteil des Formwerkzeuges.
- Figur 3: eine weiter vergrößerte Darstellung des Niederhalters.
- Figur 4: einen Schnitt entlang der Linie A - A in Figur 3.

Das Formwerkzeug besteht aus dem Oberteil 1 und dem Unterteil 2. Letzteres umfasst eine Grundplatte 3, einen Kühlblock 4 und in diesen pro Formnest eingesetzte Formeinsätze 5 einreihig wie dargestellt oder mehrreihig mit der Gestalt der herzustellenden Behälter. Die Formeinsätze 5 sind einteilig oder zweiteilig ausgebildet und tragen bei kombiniert formenden und stanzenden Formwerkzeugen an der oberen, der Folienbahn 7 zugewandtem Seite, eine Schnittkante 8. Eine Kühlung der Formeinsätze 5 erfolgt über die Kammer 9 zwischen Kühlblock 4 und Außenform der Formeinsätze 5 in bekannter Weise. Zum Ausschieben der geformten und ausgestanzten Behälter aus den Formeinsätzen 5 dient je ein verschiebbarer Formboden 6.

Das Oberteil 1 setzt sich zusammen aus einer Kopfplatte 11, einer Zwischenplatte 10, der Matrize 12 und einem in jedem Formnest angeordneten Niederhalter 13. Jeder Niederhalter 13 ist federnd nachgiebig gehalten und schiebt nach dem Ausstanzen der Behälter und nach dem Öffnen des Formwerkzeuges diese aus der Matrizenbohrung. Im Niederhalter 13 ist ein Streckhelfer 14 angeordnet. Alle Streckhelfer 14 sind jeweils über eine Stange 15 mit einer gemeinsamen Halteplatte 16 verbunden. Diese kann über eine als Pfeil 17 dargestellte Antriebseinrichtung verschoben werden. Sie weist wahlweise eine mit einer Druckluftquelle über ein Hauptventil in Verbindung stehende Bohrung 18 auf, die mit der Axialbohrung 19 in der Stange 15 zum Zuführen der Formluft in Verbindung steht. Die Formluftzufuhr/-abfuhr kann aber auch über Bohrungen 39, 40 ins Innere der Niederhalter 13 erfolgen.

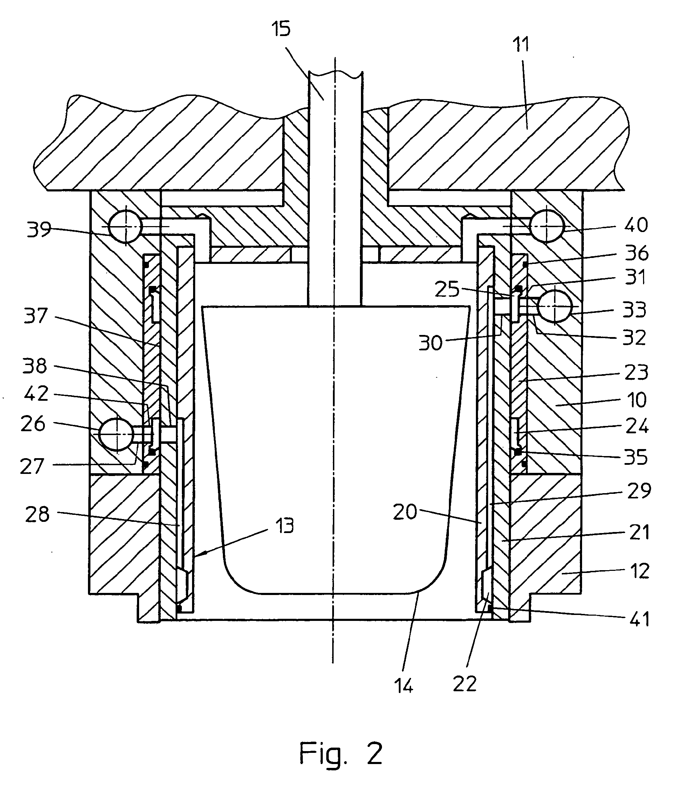

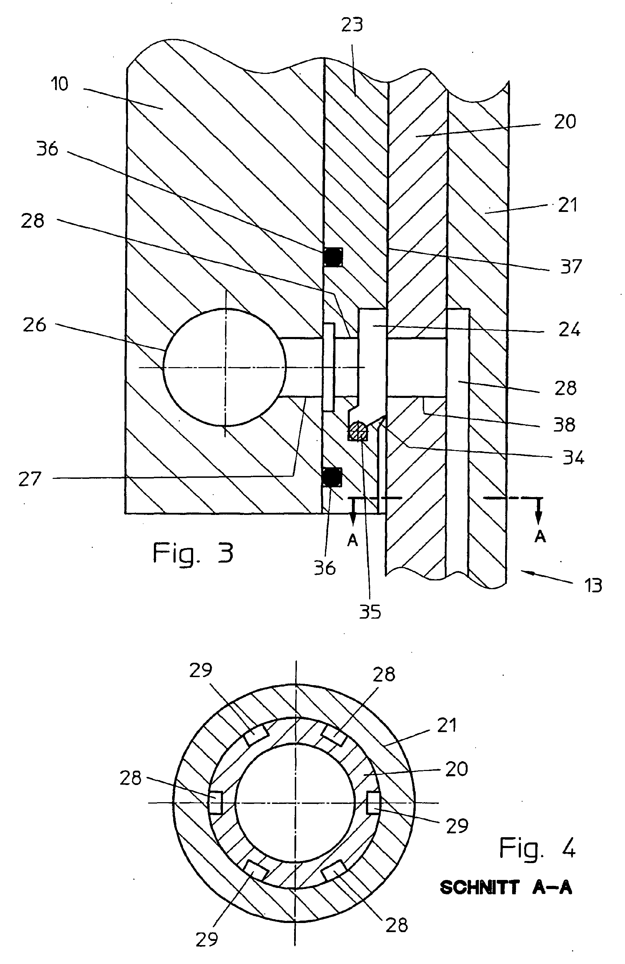

Die Erfindung betrifft die Gestaltung der Niederhalter 13, ihre Kühlung einschließlich Abdichtung und ihre Führung. Wie insbesondere aus den Figuren 2 und 3 ersichtlich besteht jeder Niederhalter 13 aus einem topfförmigen Innenelement 20 und einem topfförmigen Außenelement 21, die miteinander verbunden und am unteren Ende verschweißt oder über eine Dichtung 41 zueinander abgedichtet sind. Zwischen beiden ist auf der der Folienbahn 7 zugewandten Stirnseite ein Ringkanal 22 eingearbeitet. In der Zwischenplatte 10 sitzt eine Hülse 23, die zwei Ringkanäle 24, 25 aufweist. Der eine Ringkanal 24 steht dabei über Bohrungen 27, 42 mit einer Bohrung 26 in der Zwischenplatte 10 zum Zuführen einer Kühlflüssigkeit sowie über eine Bohrung 38 im Außenelement 20 und über einen Kanal 28 oder über mehrere Kanäle 28 (siehe Figur 4) im Innenelement 20 mit dem Ringkanal 22 in Verbindung. Die Ableitung der Kühlflüssigkeit erfolgt über einen gegenüberliegenden Kanal 29 oder über mehrere Kanäle 29 im Innenelement 20, die von der Ringnut 22 bis zu einer Bohrung 30 im Außenelement 21 und damit zum Ringkanal 25 führen. Von dort aus führen Bohrungen 31, 32 bis zur Bohrung 33 in der Zwischenplatte 10, die zum Ableiten der Kühlflüssigkeit dient.

Zur Abdichtung der Kühlflüssigkeit dienen Dichtlippen 34 (siehe Fig. 3), die Teil der Hülse 23 sind und zur besseren Dichtwirkung mit einer Ringfeder 35 angedrückt werden. Dichtringe 36 dienen der Abdichtung statische beanspruchter Bereiche.
Der zwischen den Ringkammern 24, 25 verbleibende Bereich ist gemäß einer Weiterbildung der Erfindung als Führungsbereich 37 ausgebildet mit entsprechender Passung und Oberflächengüte, um eine gute Führung für das Außenelement 21 des Niederhalters 13 herbeizuführen.

Die Hülse 37 ist vorzugsweise aus Kunststoff ausgeführt. Insbesondere PTFE ist als Werkstoff sehr geeignet.

## Patentansprüche

1. Formwerkzeug zum Tiefziehen von Behältern aus einer erwärmten Folienbahn (7) aus thermoplastischem Kunststoff, bestehend aus Oberteil (1) und Unterteil (2), wobei das Unterteil (2) die Formeinsätze (5) trägt und das Oberteil (1) eine Zwischenplatte (10), eine Matrize (12), pro Formnest einen Niederhalter (13), bestehend aus einem Außenelement (21) und einem Innenelement (20) mit einem Zwischenraum zum Durchleiten einer Kühlflüssigkeit und einen in jedem Niederhalter (13) angeordneten, über eine Stange (15) verschiebbaren Streckhelfer (14) aufweist, **dadurch gekennzeichnet, dass** in der Zwischenplatte (10) eine Hülse (23) sitzt, die zwei Ringkammern (24, 25) zum Zuführen und Abführen eines Kühlmediums mit je einer Dichtlippe (34) aufweist, wobei von den Ringkammern (24, 25) aus Bohrungen (30, 38) zu den in dem Innenelement (20) angeordneten Kanälen (28, 29) führen, die in einer Ringkammer (22) zwischen Außenelement (21) und Innenelement (20) münden.

2. Formwerkzeug nach Anspruch 1, **dadurch gekennzeichnet, dass** mehrere Kanäle (28) zum Zuleiten und/oder mehrere Kanäle (29) zum Ableiten der Kühlflüssigkeit im Innenelement (20) angeordnet sind.

3. Formwerkzeug nach Anspruch 1 oder 2, **dadurch gekennzeichnet, dass** an der Hülse (23) zwischen den beiden Ringkammern (24, 25) ein Führungsbereich (37) für den Niederhalter (13) ausgebildet ist.

4. Formwerkzeug nach einem der Ansprüche 1 bis 3, **dadurch gekennzeichnet, dass** die Dichtlippen (34) von einer Ringfeder (35) vorgespannt werden.

5. Formwerkzeug nach einem der Ansprüche 1 bis 4, **dadurch gekennzeichnet, dass** die Hülse (37) aus einem Kunststoff, vorzugsweise aus PTFE besteht.

## Claims

1. A moulding tool for deep-drawing containers from a heated foil strip (7) of thermoplastic polymer, consisting of an upper part (1) and a lower part (2), wherein the lower part (2) carries the mould inserts (5) and the upper part (1) features an intermediate plate (10), a die (12) and one blank holder (13) per mould cavity that consists of an outer element (21) and an inner element (20) with an intermediate space for conveying through a cooling fluid, as well as an auxiliary stretcher (14) that is arranged in each blank holder (13) and can be displaced by means of a rod (15), **characterized in that** a sleeve (23) is seated in the intermediate plate (10) and features two annular chambers (24, 25) that serve for supplying and discharging a cooling medium and are respectively provided with a sealing lip (34), wherein bores (30, 38) lead from the annular chambers (24, 25) to the channels (28, 29) that are arranged in the inner element (20) and end in an annular chamber (22) between the outer element (21) and the inner element (20).

2. The moulding tool according to Claim 1, **characterized in that** several channels (28) for supplying and/or several channels (29) for discharging the cooling fluid are arranged in the inner element (20).

3. The moulding tool according to Claim 1 or 2, **characterized in that** a guide region (37) for the blank holder (13) is realized on the sleeve (23) between the two annular chambers (24, 25).

4. The moulding tool according to one of Claims 1 to 3, **characterized in that** the sealing lips (34) are prestressed by an annular spring (35).

5. The moulding tool according to one of Claims 1 to 4, **characterized in that** the sleeve (37) consists of a plastic, preferably of PTFE.

## Revendications

1. Outil de forme pour former des conteneurs à partir d'une bande de film (7) en un matériau thermoplastique chauffé, composé d'une partie supérieure (1) et d'une partie inférieure (2), la partie inférieure (2) portant les noyaux (5) du moule et la partie supérieure (1) étant pourvue d'une plaque intermédiaire (10), d'une matrice (12), d'un serre-flan (13) par empreinte, composé d'un élément extérieur (21) et d'un élément intérieur (20) avec un espace intermédiaire pour le passage d'un liquide de refroidissement et d'un dispositif d'assistance à l'extension (14) disposé dans chaque serre-flan (13) et mobile par l'intermédiaire d'une barre (15), **caractérisé en ce qu'**une douille (23), qui possède deux chambres annulaires (24, 25) pour l'arrivée et le départ d'un fluide de refroidissement, chacune munie d'une lèvre d'étanchéité (34), est logée dans la plaque intermédiaire (10), des perçages (30, 38) allant des chambres annulaires (24, 25) aux canaux (28, 29) disposés dans l'élément intérieur (20) et qui débouchent dans une chambre annulaire (22) entre l'élément extérieur (21) et l'élément intérieur (20).

2. Outil de forme selon la revendication 1, **caractérisé en ce que** plusieurs canaux (28) pour l'arrivée et/ou plusieurs canaux (29) pour le départ du liquide de refroidissement sont disposés dans l'élément intérieur (20).

3. Outil de forme selon la revendication 1 ou 2, **caractérisé en ce qu'**une zone de guidage (37) pour le serre-flan (13) est ménagée sur la douille (23) entre les deux chambres annulaires (24, 25).

4. Outil de forme selon l'une des revendications 1 à 3, **caractérisé en ce que** les lèvres d'étanchéité (34) sont précontraintes par un ressort-bague (35).

5. Outil de forme selon l'une des revendications 1 à 4, **caractérisé en ce que** la douille (37) est réalisée en une matière synthétique, de préférence en PTFE.
